# FASCICULE DE BREVET EUROPEEN

(11) **EP 0 576 356 B1**
(45) Date de publication et mention de la délivrance du brevet: **17.12.1997**
(21) Numéro de dépôt: 93401613.0
(22) Date de dépôt: 23.06.1993
(51) Int. Cl.: H02H 3/33

(54) **Circuit pour interrupteurs différentiels**
Schaltung für Fehlerstromschutzschalter
Circuit for fault-current circuit breaker

(30) Priorité: 24.06.1992 FR 9207855
(43) Date de publication de la demande: 29.12.1993
(73) Titulaire: SERD Société d'Etude et de Réalisation de Disjoncteurs, 67100 Strasbourg (FR)
(72) Inventeur: Weiss, Jean-Pierre, F-68540 Bollwiller (FR); Hugel, Philippe, F-67640 Fegersheim (FR)
(74) Mandataire: CABINET BONNET-THIRION

(56) Documents cités:
- DE-A- 2 530 456
- FR-A- 2 036 941
- FR-A- 2 622 369
- US-A- 3 697 810

## Description

L'invention concerne un interrupteur ou disjoncteur différentiel à courant de défaut, avec un transformateur de courant totalisateur et un déclencheur dont la bobine d'excitation est branchée sur l'enroulement secondaire du transformateur de courant totalisateur à travers un circuit de déclenchement indépendant de la tension du réseau, comprenant un circuit redresseur qui délivre à au moins un condensateur de charge l'énergie nécessaire pour actionner le déclencheur, ainsi qu'une vanne électronique commandée en fonction de la tension accumulée dans le condensateur de charge en vue du déblocage de cette énergie vers la bobine d'excitation du déclencheur.

Comme les interrupteurs et disjoncteurs différentiels à courant de défaut doivent satisfaire dans des circonstances de service variables des prescriptions de sécurité élevées, leur courbe de déclenchement, en particulier la courbe de déclenchement indépendante de la température, prend une importance accrue. Jusqu'à présent ont été utilisés entre autres des transistors à effet de champ comme interrupteurs électroniques fonction de la tension, afin d'exploiter la haute résistance d'entrée de ces composants. Toutefois, il s'est avéré que des dérives jusqu'à 50 % imputables aux composants ainsi qu'une forte dépendance thermique des tensions de commande gate nécessitent des circuits de commande techniques additionnels onéreux ainsi qu'un ajustement individuel des circuits.

En conséquence, un des objectifs de l'invention consiste à créer un interrupteur ou disjoncteur différentiel à courant de défaut avec un interrupteur électronique économique, dont la courbe de déclenchement prescrite est respectée fiablement dans des circonstances de service diverses.

Pour résoudre ce problème, l'invention a pour objet un interrupteur ou disjoncteur différentiel à courant de défaut, avec un transformateur de courant totalisateur et un déclencheur dont la bobine d'excitation est branchée sur l'enroulement secondaire du transformateur de courant totalisateur à travers un circuit de déclenchement indépendant de la tension du réseau, comprenant un circuit redresseur qui délivre à au moins un condensateur de charge l'énergie nécessaire pour actionner le déclencheur, ainsi qu'une vanne électronique commandée en fonction de la tension accumulée dans le condensateur de charge en vue du déblocage de cette énergie vers la bobine d'excitation du déclencheur, cette vanne électronique comportant deux transistors montés en cascade et commandés en conduction par un circuit comprenant un élément à seuil de tension, cet interrupteur ou disjoncteur différentiel à courant de défaut étant caractérisé en ce que l'élément à seuil de tension est une microdiode Zener, qui est montée en sens de non-conduction, et qui, du côté du transformateur de courant totalisateur, est reliée à une diode appartenant au circuit redresseur et branchée en parallèle sur un montage en série comportant une diode et le condensateur de charge, en sorte que la tension qui lui est appliquée est supérieure à celle appliquée au condensateur de charge et que la vanne électronique forme un interrupteur à seuil de tension ayant de faibles pertes et une haute résistance d'entrée, dont la courbe de commutation en fonction de la tension est déterminée essentiellement par la microdiode Zener.

La microdiode Zener présente une courbe de commutation fonction de la tension et indépendante de la température, peu affectée par la dispersion des composants, ce qui réduit également le coût de fabrication dû au réglage du montage. Comme la microdiode Zener présente au-dessous de sa tension directe Zener une résistance d'entrée très élevée, il n'apparaît que de faibles pertes dans le circuit de commande de l'interrupteur électronique au-dessous du seuil de commutation.

Si un circuit amplificateur transistorisé à double étage est monté en aval de la microdiode Zener, il ne se produira également au-dessus du seuil de commutation que des pertes réduites dans le circuit de commande de l'interrupteur électronique. Dans le cas d'une microdiode Zener ayant une tension Zener de 2,5 V, un courant de commande de 20 µA était déjà suffisant pour actionner l'interrupteur électronique.

Comme le circuit de commutation de puissance du circuit amplificateur transistorisé à double étage présente en état de non-conduction une très haute résistance et en état de conduction une très faible résistance, les pertes sont également très faibles dans le circuit de commutation de puissance.

La précision du déclenchement est accrue et peut être ajustée de façon simple quant à la temporisation par le choix d'une résistance montée en série avec la microdiode Zener, si le circuit redresseur crée une tension continue accrue par rapport à celle d'un circuit redresseur demi-onde, servant à actionner l'interrupteur électronique. Cette tension continue plus élevée est réalisable au moyen de deux diodes, dont la première est montée en parallèle sur un circuit formé par la seconde diode et le condensateur de charge montés en série.

Si la bobine d'excitation du déclencheur est branchée en série avec le condensateur de charge et avec le circuit de commutation de puissance, il est possible de cette façon d'optimiser la puissance délivrée par le condensateur de charge à la bobine d'excitation en vue du processus de déclenchement.

A l'aide d'une diode de roue libre branchée en parallèle sur la bobine d'excitation du déclencheur en sens de non-conduction par rapport à la tension aux bornes du condensateur de charge, l'énergie accumulée dans le condensateur de charge peut être mieux exploitée pour le processus de déclenchement, et les pointes inductives de la bobine d'excitation lors de la commutation peuvent être écrêtées.

Les interrupteurs et disjoncteurs à courant de défaut peuvent être classés généralement selon leur courbe de déclenchement temporisé en fonction du courant, en deux catégories, en l'occurrence en interrupteurs et disjoncteurs différentiels à courant de défaut sélectifs ou non-sélectifs désignés également comme interrupteurs et disjoncteurs différentiels à courant de défaut classiques.

Les interrupteurs et disjoncteurs différentiels à courant de défaut ayant une courbe de réponse non-sélective doivent se contenter de respecter les courbes de déclenchement temporisé en fonction du courant, définies par chacune des normes nationales. Cette courbe de réponse est par exemple définie en Allemagne par la norme VDE 0664 et en France par la norme NF C 61-140, les deux prescrivant pour le courant nominal une temporisation de 0,2 s. au maximum. Pour respecter cette valeur, des transformateurs de courant totalisateurs ayant un nombre important de spires et d'un poids non négligeable étaient utilisés jusqu'à présent.

Mais comme aussi bien le poids du transformateur de courant totalisateur que le nombre de spires contribuent fortement au coût d'un interrupteur ou disjoncteur à courant de défaut, un autre objectif de l'invention consiste à réaliser un interrupteur ou disjoncteur différentiel à courant de défaut équipé d'un transformateur de courant totalisateur léger et économique. Dans ce but il est prévu que l'enroulement primaire du transformateur de courant totalisateur ne comporte qu'une seule spire par phase, et qu'une adaptation par résonance du transformateur de courant totalisateur et du circuit de déclenchement soit réalisée.

L'adaptation par résonance au circuit de déclenchement selon l'invention est effective, si une fraction essentielle de l'énergie délivrée par le transformateur de courant totalisateur n'est pas perdue pour la commande du déclencheur, à cause d'une mauvaise adaptation de l'impédance de l'enroulement secondaire du transformateur de courant totalisateur par rapport à l'impédance d'entrée du circuit déclencheur, mais que cette énergie est utilisée de manière optimale par résonance à la fréquence du réseau.

L'utilisation d'une seule spire par phase pour l'enroulement primaire du transformateur de courant totalisateur permet de prévoir un plus petit noyau en alliage de fer pour le transformateur de courant totalisateur et de le rendre plus léger. De bons résultats ont été obtenus entre autres avec des noyaux en alliage de fer réduits de 12 %.

Comme le faible nombre global de spires de l'enroulement primaire se traduit par une longueur réduite globale du fil de l'enroulement, il est possible pour une résistance de bobinage inchangée d'utiliser un fil de section plus faible. Pour une réduction de l'enroulement primaire, par exemple de deux spires par phase à une seule spire par phase, il résulte déjà une réduction de la section du fil de 25 %. Avec ou sans une moindre réduction de la section du fil, le raccourcissement de l'enroulement primaire a déjà une influence favorable sur les pertes thermiques du transformateur de courant totalisateur, ce qui pour un courant nominal usuel de 63 A et un échauffement maximal toléré de 65°C est absolument appréciable.

L'adaptation par résonance souhaitée peut être obtenue économiquement du fait que le circuit de déclenchement possède à la fois un condensateur monté en parallèle et un condensateur monté en série sur les bornes d'entrée. Par modification du rapport des capacités respectives des deux condensateurs, l'impédance complexe d'entrée du circuit déclencheur est influençable et adaptable à l'impédance de l'enroulement secondaire du transformateur de courant totalisateur.

Comme les courants de défauts apparaissent en général à la fréquence du réseau, l'adaptation de la puissance maximale délivrée en résonance à la fréquence du réseau par le transformateur de courant totalisateur au circuit déclencheur peut être obtenue par le choix des valeurs absolues des capacités des condensateurs.

Par suite de l'importance croissante des interrupteurs et disjoncteurs différentiels à courant de défaut sélectifs, de tels interrupteurs et disjoncteurs différentiels à courant de défaut sélectifs doivent être encore développés au sens de la présente invention.

Les interrupteurs et disjoncteurs à courant de défaut sélectifs présentent une courbe de déclenchement retardé en fonction du courant, qui doit respecter les valeurs limites imposées dans les divers pays européens et extra-européens, lesquelles sont déterminées par exemple en France par la norme NF C 62-411 et en RFA par la norme VDE 0664. Les interrupteurs et disjoncteurs différentiels à courant de défaut sélectifs ont en tant que réalisation spéciale la mission, basée sur leur temporisation de déclenchement dans des distributions à dérivations, dans lesquelles aussi bien la ligne principale que les dérivations secondaires ainsi que les appareils d'installation compris dans la distribution protégée contre les courants de défaut, d'éviter une interruption de tous les appareils branchés sur la ligne principale en cas d'un défaut d'isolation dans une dérivation secondaire.

A cet effet, diverses exécutions d'interrupteurs et disjoncteurs différentiels à courant de défaut sélectifs ont été réalisées. A titre d'exemple, mentionnons le dispositif de la DE-OS 38 07 935, qui décrit un tel dispositif d'interrupteur de protection qui à vrai dire respecte convenablement les conditions de déclenchement en fonction du courant, mais qui nécessite un transformateur de courant dont l'enroulement secondaire à nombre de spires très élevé est d'une fabrication coûteuse. L'enroulement secondaire avec souvent plus de 400 spires doit en effet être bobiné mécaniquement sur le noyau torique à l'aide de dispositifs d'enroulement spéciaux basés sur l'emploi d'une navette bobinée préalablement, étant donné la géométrie et les dimensions réduites du composant. Seuls jusqu'à présent peuvent se contenter d'un faible nombre de spires pour l'enroulement secondaire en vue de transformateurs de courant totalisateurs peu onéreux, les interrupteurs et disjoncteurs différentiels à courant de défaut usuels non sélectifs, dénommés interrupteurs et disjoncteurs différentiels à courant de défaut "classiques".

Un inconvénient pour la réalisation d'interrupteurs et disjoncteurs différentiels à courant de défaut est d'autre part le fait que les interrupteurs et disjoncteurs différentiels à courant de défaut sélectifs et classiques, par suite de leurs variantes techniques individuelles de montage, doivent être fabriqués sur différentes chaînes d'assemblage et en diverses opérations de production.

Afin de pouvoir réaliser les deux variantes d'interrupteurs et disjoncteurs différentiels à courant de défaut également sur une seule chaîne d'assemblage, il est prévu que l'enroulement secondaire du transformateur de courant totalisateur comporte un faible nombre de spires et qu'il est branché sur l'enroulement primaire d'un transformateur dont l'enroulement secondaire est raccordé au circuit redresseur.

Il a été constaté de façon surprenante que déjà par cette simple amélioration technique de l'interrupteur ou disjoncteur différentiel à courant de défaut de type connu, il est possible, en utilisant un transformateur approprié avec un nombre de spires adéquat de l'enroulement secondaire du transformateur de courant totalisateur, d'employer aussi bien le transformateur de courant totalisateur économique d'interrupteur ou disjoncteur différentiel à courant de défaut classique, que ses sous-ensembles électro-mécaniques de commutation, en vue de la production d'un interrupteur ou disjoncteur différentiel à courant de défaut sélectif. Contrairement à toute attente, ceci est possible avec un nombre de spires extrêmement faible pour l'enroulement secondaire du transformateur de courant totalisateur, quoique le transformateur additionnel provoque également en principe des pertes supplémentaires. Malgré tout, il reste possible de respecter fiablement les prescriptions imposées dans les différents pays, concernant la courbe de temporisation en fonction du courant de l'interrupteur ou disjoncteur différentiel à courant de défaut sélectif.

Si de plus l'enroulement secondaire du transformateur est relié à une résistance qui est montée en parallèle sur l'enroulement secondaire, il est possible de régler aussi bien l'impédance d'entrée effective, que l'impédance de sortie effective du circuit formé par le transformateur et la résistance, ainsi que d'adapter celui-ci à une multitude de différents interrupteurs ou disjoncteurs différentiels à courant de défaut, ou encore d'influencer la courbe de temporisation ou de transfert de puissance.

Par une adaptation appropriée du transformateur de courant totalisateur, en particulier celle du nombre de spires de l'enroulement secondaire, ainsi que de la résistance, il est possible d'utiliser comme transformateur économique un transformateur HF normal à noyau en ferrite.

Une immunité très efficace contre les surtensions, en particulier en cas de coups de foudre, résulte pour l'interrupteur ou disjoncteur différentiel à courant de défaut du fait qu'on insère entre l'enroulement secondaire du transformateur de courant totalisateur et l'enroulement primaire du transformateur, une paire de diodes en montage antiparallèle tel, qu'en dessous de leur tension de conduction pratiquement aucun courant ne circule, et qu'au-dessus de cette tension la totalité du courant circule pratiquement.

Du point de vue de la technique de production, il est avantageux, que par l'insertion d'un seul module de montage, on puisse en partant d'un interrupteur ou disjoncteur différentiel à courant de défaut de type classique, réaliser un interrupteur ou disjoncteur différentiel à courant de défaut sélectif, si le transformateur et le circuit électronique, y compris le cas échéant les diodes, sont montés sur une même platine, équipée de connexions pour l'enroulement secondaire du transformateur de courant totalisateur et de connexions pour le déclencheur de l'interrupteur ou disjoncteur différentiel à courant de défaut de type classique.

L'énergie délivrée par le transformateur de courant totalisateur est convertie en une valeur utile avec de faibles pertes et des valeurs élevées de tension, si le circuit redresseur consiste en un montage à double redresseur demi-onde, avec deux condensateurs de charge et deux diodes, dans lequel les deux condensateurs de charge sont reliés chacun, d'une part à l'une des bornes de l'enroulement secondaire du transformateur, et d'autre part chaque fois à travers l'une des diodes à l'autre prise de l'enroulement secondaire du transformateur.

Le document DE-A-2 530 456 concerne un interrupteur ou disjoncteur différentiel à courant de défaut, qui doit délivrer l'énergie nécessaire au déclenchement même dans le cas de très faibles courants de défaut, et dont la sensibilité de réponse a été optimisée en conséquence.

En outre, dans ce document DE-A-2 530 456, le circuit de commande de la vanne électronique mise en oeuvre n'est pas explicité.

Le document FR-A-2 036 941 concerne un interrupteur ou disjoncteur différentiel à courant de défaut dont l'alimentation vient de l'extérieur, qu'il s'agisse du réseau ou d'une source autonome telle que pile ou batterie, mais cette alimentation n'est pas tirée, comme dans la présente invention, du signal même de défaut.

Il s'agit donc d'un interrupteur ou disjoncteur différentiel à courant de défaut fondamentalement différent de celui faisant l'objet de la présente invention.

Enfin, le document US-A-3 697 810 concerne lui aussi un interrupteur ou disjoncteur différentiel à courant de défaut dont l'alimentation est extérieure, et qui, pour répondre à des exigences spécifiques, comporte un très grand nombre de composants.

Dans ce qui suit, l'invention sera décrite en détail à l'aide du dessin annexé, dont
Fig. 1 est un schéma du circuit d'une première forme d'exécution d'un interrupteur ou disjoncteur différentiel à courant de défaut conforme à l'invention ;
Fig. 2 est en tant que seconde forme d'exécution un schéma du circuit d'un interrupteur ou disjoncteur différentiel à courant de défaut sélectif conforme à l'invention.

L'interrupteur ou disjoncteur différentiel à courant de défaut conforme à l'invention dans une première forme d'exécution comporte un transformateur de courant totalisateur 1 dont le noyau 2 entoure les phases d'une ligne de réseau 3 indiquée seulement schématiquement. La ligne de réseau 3 peut comprendre deux ou plusieurs phases, lesquelles forment chacune une spire de l'enroulement primaire du transformateur de courant totalisateur 1.

L'enroulement secondaire 4 du transformateur de courant totalisateur 1 comprend dans le présent exemple d'exécution environ 550 spires et est raccordé au circuit déclencheur par les points de connexion E1, E2.

Du côté entrée, le circuit déclencheur 5 comprend un condensateur 6 branché en parallèle sur l'enroulement secondaire 4 ainsi qu'un condensateur 7 branché en série avec l'enroulement secondaire 4, le rapport des capacités du condensateur 6 et du condensateur 7 étant avantageusement de 1 à 10.

Les deux condensateurs 6, 7, sont connectés ensemble à travers une première diode 8 au circuit redresseur 11 formé par les diodes 8, 9, et le condensateur de charge 10.

Les condensateurs 6, 7, le circuit redresseur 11 et l'enroulement secondaire 4 du transformateur de courant totalisateur 1 constituent au-dessous du seuil de commutation de l'interrupteur électronique 12 un circuit résonnant qui est accordé de telle façon qu'en cas de courant de défaut d'une fréquence approximative du réseau, un maximum de puissance de l'énergie électrique recueillie par le transformateur de courant totalisateur 1 se trouve transmise au circuit déclencheur 5. Pour arriver à accorder cette résonance, le rapport des capacités des condensateurs 6, 7, et leurs valeurs absolues par rapport à l'inductance de l'enroulement secondaire 4 sont optimisés.

Dans le circuit redresseur 11, la première diode 8 est branchée en parallèle sur un montage en série de la seconde diode 9 et du condensateur de charge 10, de sorte que sur la diode 8 est appliquée une tension supérieure à celle du condensateur de charge 10. Cette tension accrue est appliquée à la microdiode Zener 13 à travers une résistance 14 prévue pour ajuster la tension.

Comme la tension appliquée à la microdiode Zener 13 à travers la résistance 14 suit essentiellement la courbe de charge du condensateur de charge 10, il est possible d'influencer par le choix de la résistance 14 la hauteur de cette tension qui croît en fonction du temps, et ainsi la courbe de temporisation de l'interrupteur électronique 12.

A l'aide de différentes résistances 14, on peut répondre aux différentes normes prescrites relatives à la courbe de déclenchement temporisé en fonction du courant des interrupteurs ou disjoncteurs différentiels à courant de défaut.

La microdiode Zener 13 contrôle la base du transistor 15 à travers un montage en parallèle d'une résistance 16 et d'un condensateur 17. Le collecteur du transistor 15 est relié par une résistance 18 montée dans le circuit de commutation de puissance, et par la base du transistor 19. De ce fait se trouve réalisé un circuit amplificateur transistorisé à double étage en cascade assurant une forte amplification du courant, et qui est commutable en état de conduction déjà avec un courant Zener de 20 µA. La diode Zener atteint dans ces conditions une tension Zener de 2,5 V.

L'interrupteur électronique 12 constitué par la microdiode Zener 13, les transistors 15, 19, les redresseurs 16, 18, et le condensateur 17 est un interrupteur à seuil de tension qui est essentiellement caractérisé par la courbe en fonction de la tension de la microdiode Zener 13 montée en sens de non-conduction, et qui en état de non-conduction présente une haute résistance aussi bien dans le circuit de commande que dans le circuit de commutation de puissance.

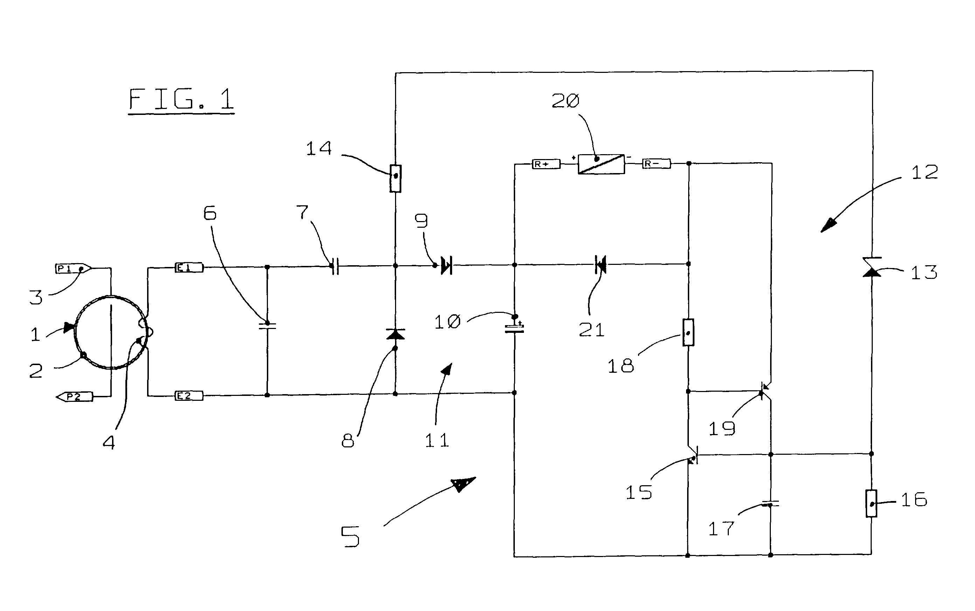

En série avec le circuit de commutation de puissance de l'interrupteur électronique 12 sont branchés aussi bien le condensateur de charge 10 que la bobine d'excitation 20 du déclencheur représenté seulement partiellement sur la fig. 1.

En parallèle sur la bobine d'excitation 20 est branchée en sens de non-conduction en fonction de la tension aux bornes du condensateur de charge 10, une diode de roue libre 21.

Sur la figure 1, la partie non représentée du déclencheur, les contacts de ce dernier sont insérés de telle sorte dans la ligne de réseau 3, que lors d'un déclenchement de l'interrupteur ou disjoncteur différentiel à courant de défaut, il se produise une séparation galvanique entre le réseau d'appareils utilisateurs et le réseau d'alimentation.

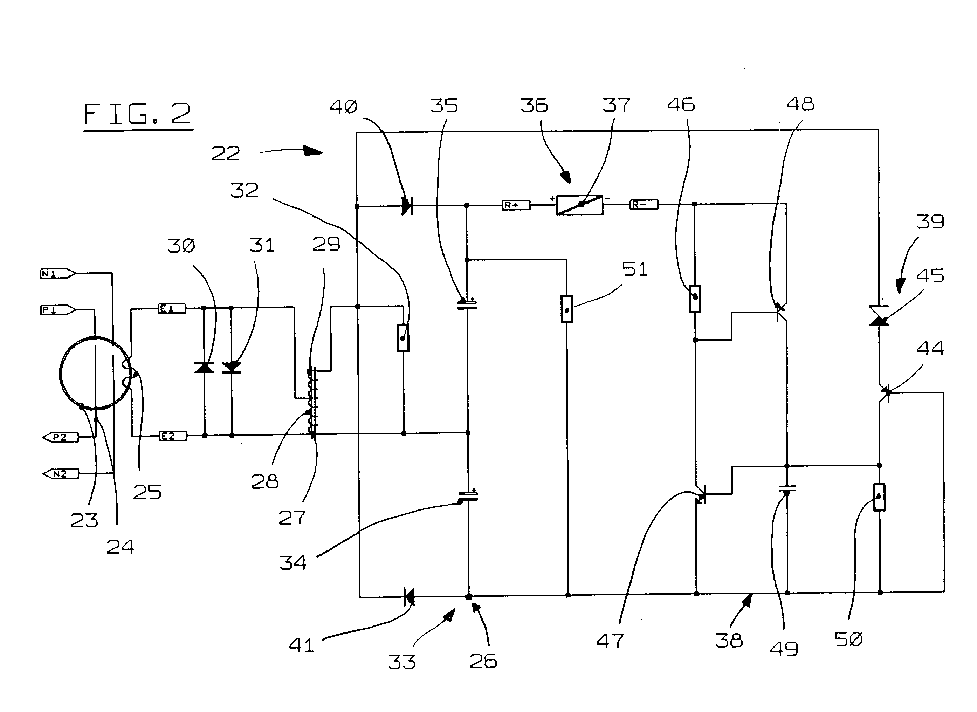

Dans ce qui suit, une autre forme d'exécution est décrite en se référant à la figure 2, dans laquelle l'interrupteur ou disjoncteur différentiel à courant de défaut présente une courbe de déclenchement temporisée sélective.

L'interrupteur ou disjoncteur différentiel à courant de défaut sélectif désigné globalement par 22 comporte un transformateur de courant totalisateur 23, qui est raccordé à l'enroulement primaire d'un transformateur 27 qui par son enroulement secondaire est branché à un circuit de déclenchement 33 indépendant de la tension du réseau. Ce circuit consiste essentiellement en un circuit redresseur 26, comprenant les condensateurs 34, 35 servant à accumuler l'énergie de commande d'un déclencheur 36, représenté dans la figure 2 uniquement par sa bobine d'excitation 37, et une vanne électronique 38 avec des composants 39 servant à sa commande en fonction de la tension de charge du pont redresseur 26.

Le transformateur de courant totalisateur 23 entoure des conducteurs 24 représentés schématiquement par au moins deux conducteurs d'un réseau quelconque, en l'occurrence dans l'exemple choisi un réseau de courant alternatif 230 V ou 115 V de fréquence 50 Hz ou 60 Hz. L'enroulement secondaire 25 du transformateur de courant totalisateur 23 est enroulé sur son noyau torique. Le nombre de spires doit être conformément à l'invention très faible, et compte dans les exemples d'exécution présentés environ 4 à 9 spires, un résultat particulièrement avantageux étant obtenu avec 6 spires, car déjà avec ce nombre de spires très réduit, un fonctionnement extrêmement fiable de l'interrupteur ou disjoncteur différentiel à courant de défaut est possible.

Avec des nombres de spires plus élevés que ceux mentionnés ci-dessus, le montage est également très fonctionnel, lorsque le rapport de transfert de tension du transformateur est ajusté en conséquence, cependant il en découle une dépense supérieure en ce qui concerne la technique de fabrication de l'enroulement secondaire du transformateur de courant totalisateur, de sorte qu'il convient de ne pas dépasser environ 20 spires.

Dans l'esprit de l'invention, on considère comme faible nombre de spires dans l'enroulement secondaire, un nombre de spires qui par utilisation d'un transformateur librement choisi, est inférieur à des nombres de spires de l'enroulement secondaire d'un transformateur de courant totalisateur non associé à un transformateur approprié en aval, mais avec à peu près les mêmes valeurs de sortie.

L'enroulement secondaire 25 du transformateur de courant totalisateur 23 est raccordé à l'enroulement primaire 28 du transformateur 27, dont l'enroulement secondaire 29 est relié au pont redresseur 26.

Le rapport de transformation de tension du transformateur 27, en cas d'un enroulement secondaire du transformateur de courant de 6 spires, est de préférence tel, que pour une tension d'environ 60mV appliquée à l'enroulement primaire 28, une tension d'environ 3V apparaît à l'enroulement secondaire 29.

Il convient de tenir compte, de façon connue, en ce qui concerne le rapport de transformation des tensions, que des pertes dans le transformateur apparaissent en cas de faibles courants et aimantations, en fonction du matériau utilisé pour le noyau du transformateur, ces pertes devant être compensées par une correction appropriée du rapport des spires entre enroulements primaire et secondaire.

Avec les corrections correspondantes dans chaque cas, il est possible d'utiliser comme transformateur 27 un transformateur HF normal à noyau de ferrite.

De préférence on utilisera un transformateur 27 dans lequel l'une des prises de l'enroulement primaire 28 et l'une des prises de l'enroulement secondaire 29 sont communes pour les deux enroulements, étant précisé que le fil de bobinage de l'enroulement primaire 28 a par exemple un diamètre de 0,3 mm et que le fil de bobinage de l'enroulement secondaire 29 a un diamètre de 0,05 mm par exemple.

Entre le transformateur de courant totalisateur 23 et le transformateur 27, on peut intercaler des diodes 30, 31 qui sont montées en sens antiparallèle aussi bien par rapport à l'enroulement secondaire 25 du transformateur de courant totalisateur 23, que par rapport à l'enroulement primaire 28 du transformateur 27. Ce montage est tel, qu'en-dessous de leurs tensions de diodes, pratiquement aucun courant ne circule, et qu'au-dessus de leurs tensions de diodes, la totalité du courant peut circuler.

Du côté de la sortie et en parallèle avec l'enroulement secondaire 29 du transformateur 27, est branchée une résistance 32. Grâce à celle-ci, il est possible d'ajuster l'adaptation technique d'une part de la résistance d'entrée effective ou respectivement de l'impédance d'entrée effective, d'autre part également la résistance de sortie effective ou respectivement l'impédance de sortie effective, du circuit formé par le transformateur 27 et la résistance 32.

En outre, en vue de l'adaptation adéquate de la puissance du transformateur de courant totalisateur 23 en fonction du transformateur 27, on peut choisir de telle sorte l'impédance d'entrée effective du transformateur 27 y compris le circuit de déclenchement 33 avec la résistance 32, que cette impédance d'entrée soit égale à l'impédance de sortie de l'enroulement secondaire 25 du transformateur de courant totalisateur 23.

Le circuit redresseur 26 consiste en un circuit à double redresseur demi-onde, dans lequel sont inclus deux condensateurs de charge 34, 35 ainsi que deux diodes 40, 41 qui conduisent aux condensateurs de charge 34, 35 montés en série, l'énergie délivrée chaque fois par le transformateur 27, afin de les charger de telle sorte que les tensions aux bornes des condensateurs de charge 34, 35 s'additionnent et que de ce fait on dispose pour la commande de la vanne électronique 38 d'une tension qui corresponde à peu près au double de la tension de charge de chacun des condensateurs 34, 35.

Les deux condensateurs 34, 35 sont chaque fois raccordés par une des bornes à la première prise de l'enroulement secondaire 29 du transformateur 27, et chaque fois par l'autre borne à l'une des prises d'une diode 40, 41, la seconde prise des diodes 40, 41 étant raccordée chaque fois à la seconde prise de l'enroulement secondaire 29 du transformateur 27.

En parallèle sur les deux condensateurs 34, 35, est montée une résistance 51 à haute valeur ohmique, qui évacue les charges résiduelles et parasites des condensateurs 34, 35, et veille ainsi à assurer des conditions de sortie bien définies avant le déclenchement de l'interrupteur ou disjoncteur différentiel à courant de défaut, mais qui du fait de la constante de temps élevée du circuit RC formé par la résistance 51 et les condensateurs 34, 35, n'influencent pas notablement le processus de déclenchement.

Le pont redresseur 26 est raccordé à l'enroulement 37 du déclencheur 36 et à la vanne électronique 38, la bobine d'excitation 37 et la vanne électronique 38 étant montées en série et en parallèle sur les condensateurs de charge 34, 35, de sorte que lors de l'ouverture commandée de la vanne électronique 38, les charges accumulées dans les condensateurs 34, 35 circulent sous forme de courant dans la bobine d'excitation 37, et la vanne électronique 38, les contacts de commutation du déclencheur 36 non représentés sur la figure étant alors actionnés. De ce fait, le branchement de la voie 24 est coupé du réseau.

Les composants déjà mentionnés 39 servant à actionner la vanne électronique 38 en fonction de la tension de charge du circuit redresseur 26 veillent à ce que soit assurée une caractéristique de déclenchement temporisé fonction du courant 43, comme illustré sur la figure 6 de la DE-OS 38 07 935, étant précisé que les normes énoncées plus haut sont respectées. Dans l'exemple d'exécution décrit, la commande s'effectue par l'intermédiaire d'un transistor 44, dont la voie émetteur-base est en série avec une microdiode Zener 45. Lorsque la tension accumulée sur les condensateurs de charge 34, 35, augmentée d'une tension directe de diode, atteint la tension Zener de la microdiode Zener, un courant Zener commence à circuler, qui s'écoule par la voie base-émetteur du transistor 44 et rend conducteur ce dernier.

Comme le transistor 44 constitue une partie de la vanne électronique commandée 38, qui comprend d'autre part un montage en cascade connu en soi des transistors 47, 48 avec les résistances 46, 50 et le condensateur 49, et comme le montage en cascade assure une amplification de courant élevée tandis qu'en état de non-conduction des transistors 47, 48, la résistance du montage en cascade est élevée, on obtient avec la microdiode Zener 45 et la vanne électronique commandée 38 un interrupteur à seuil de tension ayant des pertes extrêmement réduites.

Entre la microdiode Zener 45 et le condensateur de charge 35 est montée la diode 40 commandée dans le sens de conduction. Cette diode compense par la tension créée dans le sens de conduction, la chute de tension apparaissant sur la voie émetteur-base du transistor 44. Du fait de cette compensation de tension, on supprime également pratiquement le phénomène de la dérive thermique du transistor 44, étant donné que la diode 40 présente une dérive thermique analogue puisqu'elle est disposée à proximité du transistor 44 et est également pratiquement à la même température que le transistor 44.

Comme la microdiode Zener présente une courbe thermique très peu importante, la caractéristique de commutation de la vanne électronique commandée 38 est globalement sujette à des variations thermiques extrêmement réduites.

## Revendications

1. Interrupteur ou disjoncteur différentiel à courant de défaut, avec un transformateur de courant totalisateur (1, 23) et un déclencheur dont la bobine d'excitation (20, 37) est branchée sur l'enroulement secondaire (4, 25) du transformateur de courant totalisateur (1, 23) à travers un circuit de déclenchement (5, 33) indépendant de la tension du réseau, comprenant un circuit redresseur (11, 26) qui délivre à au moins un condensateur de charge (10, 34-35) l'énergie nécessaire pour actionner le déclencheur, ainsi qu'une vanne électronique (12, 38) commandée en fonction de la tension accumulée dans le condensateur de charge (10, 34-35) en vue du déblocage de cette énergie vers la bobine d'excitation (20, 37) du déclencheur, ladite vanne électronique (12, 38) comportant deux transistors (15-19, 47-48) montés en cascade et commandés en conduction par un circuit comprenant un élément à seuil de tension (13, 45), caractérisé en ce que ledit élément à seuil de tension est une microdiode Zener (13, 45), qui est montée en sens de non-conduction, et qui, du côté du transformateur de courant totalisateur (1, 23), est reliée à une diode (8, 41) appartenant au circuit redresseur (11, 26) et branchée en parallèle sur un montage en série comportant une diode (9, 40) et le condensateur de charge (10, 34-35), en sorte que la tension qui lui est appliquée est supérieure à celle appliquée au condensateur de charge (10, 34-35) et que la vanne électronique (12, 38) forme un interrupteur à seuil de tension ayant de faibles pertes et une haute résistance d'entrée, dont la courbe de commutation en fonction de la tension est déterminée essentiellement par la microdiode Zener (13, 45).

2. Interrupteur ou disjoncteur différentiel à courant de défaut selon la revendication 1, caractérisé par le fait que la microdiode Zener (13, 45) présente une tension Zener de 2,5 V et que l'interrupteur électronique peut être actionné par un courant Zener de 20 µA.

3. Interrupteur ou disjoncteur différentiel à courant de défaut selon l'une quelconque des revendications 1 ou 2, caractérisé par le fait qu'une résistance (14) est montée en série avec la microdiode Zener (13) en vue d'une adaptation de la caractéristique temporelle de déclenchement de la vanne électronique (12, 38).

4. Interrupteur ou disjoncteur différentiel à courant de défaut selon l'une quelconque des revendications 1 à 3, caractérisé par le fait que le circuit redresseur (11, 26) crée une tension continue accrue par rapport à un pont redresseur demi-onde, et qui sert à commander la vanne électronique (12, 38).

5. Interrupteur ou disjoncteur différentiel à courant de défaut selon l'une quelconque des revendications 1 à 4, caractérisé par le fait que la bobine d'excitation (20, 37) du déclencheur est montée en série avec le condensateur de charge (10, 34-35) et le circuit de commutation de puissance de la vanne électronique (12, 38).

6. Interrupteur ou disjoncteur différentiel à courant de défaut selon l'une quelconque des revendications 1 à 5, caractérisé par le fait qu'une diode de roue libre (21) est connectée en parallèle sur la bobine d'excitation (20) du déclencheur, en sens de non-conduction par rapport à la tension accumulée dans le condensateur de charge (10).

7. Interrupteur ou disjoncteur différentiel à courant de défaut selon l'une quelconque des revendications 1 à 6, caractérisé par le fait que l'enroulement primaire du transformateur de courant totalisateur (1, 23) comprend une seule spire par phase, et qu'une adaptation par résonance du transformateur de courant totalisateur (1, 23) est prévue en combinaison avec le circuit déclencheur (5, 33).

8. Interrupteur ou disjoncteur différentiel à courant de défaut selon l'une quelconque des revendications 1 à 7, caractérisé par le fait que le circuit déclencheur (5) comprend à la fois un condensateur en parallèle et un condensateur en série (6, 7) montés sur les connexions d'entrée (E1, E2).

9. Interrupteur ou disjoncteur différentiel à courant de défaut selon la revendication 1, caractérisé par le fait que l'interrupteur ou disjoncteur différentiel à courant de défaut est un interrupteur ou disjoncteur différentiel à courant de défaut sélectif, et que l'enroulement secondaire (25) du transformateur de courant totalisateur (23) comprend un faible nombre de spires et qu'il est branché sur l'enroulement primaire (28) d'un transformateur (27) dont l'enroulement secondaire (29) est raccordé au circuit redresseur (26).

10. Interrupteur ou disjoncteur différentiel à courant de défaut sélectif selon la revendication 9, caractérisé par le fait que l'enroulement secondaire (29) du transformateur (27) est branché sur une résistance (32) qui est montée en parallèle sur l'enroulement secondaire (29) et qui permet d'ajuster d'une part l'impédance effective d'entrée et d'autre part l'impédance effective de sortie du circuit formé par le transformateur (27) et la résistance (32).

11. Interrupteur ou disjoncteur différentiel à courant de défaut sélectif selon l'une quelconque des revendications 9 ou 10, caractérisé par le fait que l'enroulement primaire (28) et l'enroulement secondaire (29) du transformateur (27) ont une prise commune, et que le fil de bobinage de l'enroulement primaire (28) est de diamètre différent de celui du fil de bobinage de l'enroulement secondaire (29).

12. Interrupteur ou disjoncteur différentiel à courant de défaut sélectif selon l'une quelconque des revendications 9 à 11, caractérisé par le fait que le transformateur (27) est un transformateur HF à noyau en ferrite usuel du commerce.

13. Interrupteur ou disjoncteur différentiel à courant de défaut sélectif selon l'une quelconque des revendications 9 à 12, caractérisé par le fait qu'entre l'enroulement secondaire (25) du transformateur de courant totalisateur (23) et l'enroulement primaire (28) du transformateur (27) est insérée une paire diodes (30, 31) en montage antiparallèle tel que pratiquement aucun courant ne circule en dessous de la tension de conduction, et que pratiquement la totalité du courant circule au-dessus de la tension de conduction.

14. Interrupteur ou disjoncteur différentiel à courant de défaut sélectif selon l'une quelconque des revendications 9 à 13, caractérisé par le fait que le condensateur de charge (34, 35) comporte deux condensateurs (34, 35) reliés, d'une part, à l'une des prises de l'enroulement secondaire (29) du transformateur (27), et d'autre part, à travers l'une des diodes (40, 41), à l'autre prise de l'enroulement secondaire (29) du transformateur (27).

15. Interrupteur ou disjoncteur différentiel à courant de défaut sélectif selon l'une quelconque des revendications 9 à 14, caractérisé par le fait que la vanne électronique (38) comprend un transistor (44), dont l'émetteur est contrôlé, et qui forme le premier étage d'un double étage amplificateur contrôlé, ce transistor (44) commandant un second étage amplificateur formé essentiellement du montage en cascade des deux transistors (47, 48).

16. Interrupteur ou disjoncteur différentiel à courant de défaut sélectif selon la revendication 15, caractérisé par le fait que dans le circuit redresseur (26), la diode (40) du montage en série est insérée entre le condensateur de charge (34, 35) et la microdiode Zener (45) et est montée dans le sens de conduction pour délivrer l'énergie nécessaire au condensateur de charge (34,35), et par le fait que sa tension engendrée dans le sens de conduction compense précisément la tension décroissante sur le trajet émetteur-base du transistor (44) dans le sens de conduction.

## Patentansprüche

1. Fehlerstromschutzschalter mit einem Summenstromwandler (1, 23) und einem Auslöser, dessen Erregerspule (20, 37) über eine von der Netzspannung unabhängige Auslöseschaltung (5, 33) an die Sekundärwicklung (4, 25) des Summenstromwandlers (1, 23) angeschlossen ist, mit einer Gleichrichterschaltung (11, 26), welche mindestens einem Speicherkondensator (10, 34-35) die zur Betätigung des Auslösers benötigte Energie zuführt, sowie mit einem in Abhängigkeit von der Ladespannung des Speicherkondensators (10, 34-35) steuerbaren elektronischen Schalter (12, 38) zur Freigabe dieser Energie an die Erregerspule (20, 37) des Auslösers, wobei der elektronische schalter (12, 38) eine Kaskadenschaltung mit zwei Transistoren (15-19, 47-48) aufweit, die durch eine Schaltung mit einem Schwellwertschalter (13, 45) ansteuerbar sind, **dadurch gekennzeichnet**, daß der Schwellwertschalter eine in Sperrichtung betriebene Mikro-Zenerdiode (13, 45) ist, die auf Seiten des Summenstromwandlers (1, 23) an eine zur Gleichrichterschaltung (11, 26) gehörende Diode (8, 41) angeschlossen ist, welche parallel zu einer Serienschaltung aus einer Diode (9, 40) und dem Speicherkondensator (10, 34-35) geschaltet ist, so daß die an ihr anliegende Spannung größer ist als die am Speicherkondensator (10, 34-35) anliegende Spannung und daß der elektronische Schalter (12, 38) einen Schwellwertschalter mit geringen Verlusten und hohem Eingangswiderstand bildet, dessen spannungsabhängiges Schaltverhalten im wesentlichen durch die Mikro-Zenerdiode (13, 45) bestimmt ist.

2. Fehlerstromschutzschalter nach Anspruch 1, **dadurch gekennzeichnet**, daß die Mikro-Zenerdiode (13, 45) eine Zenerspannung von 2,5 V aufweist und der elektronische Schalter mit einem Zenerstrom von 20 µA betätigbar ist.

3. Fehlerstromschutzschalter nach einem der Anspruch 1 oder 2, **dadurch gekennzeichnet**, daß zur Anpassung des zeitlichen Auslöseverhaitens des elektronischen Schalters (12, 38) ein Widerstand (14) in Reihe mit der Mikro-Zenerdiode (13) geschaltet ist.

4. Fehlerstromschutzschalter nach einem der Ansprüche 1 bis 3, **dadurch gekennzeichnet**, daß die Gleichrichterschaltung (11, 26) eine im Vergleich zu einer Halbwellengleichrichtung erhöhte Gleichspannung erzeugt, durch die der elektronische Schalter (12, 38) angesteuert ist.

5. Fehlerstromschutzschalter nach einem der Ansprüche 1 bis 4, **dadurch gekennzeichnet**, daß die Erregerspule (20, 37) des Auslösers mit dem Speicherkondensator (10, 34-35) und der Lastschaltstrecke des elektronischen Schalters (12, 38) in Serie geschaltet ist.

6. Fehlerstromschutzschalter nach einem der Ansprüche 1 bis 5, **dadurch gekennzeichnet**, daß eine Freilaufdiode (21) in Sperrichtung in Bezug auf die am Speicherkondensator (10) anliegende Spannung parallel zu der Erregerspule (20) des Ausläsers angeschlossen ist.

7. Fehlerstromschutzschalter nach einem der Ansprüche 1 bis 6, **dadurch gekennzeichnet**, daß die Primärwicklung des Summenstromwandlers (1, 23) eine einzige Windung pro Phase aufweist und eine Resonanzanpassung des Summenstromwandlers (1, 23) an die Auslöseschaltung (5, 23) vorliegt.

8. Fehlerstromschutzschalter nach einem der Ansprüche 1 bis 7, **dadurch gekennzeichnet,** daß die Auslöseschaltung (5) jeweils einen parallel und einen in Serie zu den Eingangsanschlüssen (E1, E2) geschalteten Kondensator (6, 7) aufweist.

9. Fehlerstromschutzschalter nach Anspruch 1, **dadurch gekennzeichnet**, daß der Fehlerstromschutzschalter ein selektiver Fehlerstromschutzschalter ist und die Sekundärwicklung (25) des Summenstromwandlers (23) eine geringe Windungszahl aufweist und an die Primärwicklung (28) eines Transformators (27) angeschlossen ist, dessen Sekundärwicklung (29) an die Gleichrichterschaltung (26) angeschlossen ist.

10. Selektiver Fehlerstromschutzschalter nach Anspruch 9, **dadurch gekennzeichnet,** das die Sekundärwicklung (29) des Transformators (27) an einen Widerstand (32) angeschlossen ist, welcher zur Sekundärwicklung (29) parallel geschaltet ist und durch welchen sowohl die effektive Eingangsimpedanz als auch die effektive Ausgangsimpedanz der Schaltung aus Transformator (27) und Widerstand (32) einstellbar ist.

11. Selektiver Fehlerstromschutzschalter nach einem der Ansprüche 9 oder 10, **dadurch gekennzeichnet**, daß die Primärwicklung (28) und die Sekundärwicklung (29) des Transformators (27) einen gemeinsamen Anschluß haben und die Primärwicklung (28) eine andere Wicklungsdrahtstärke als die Sekundärwicklung (29) aufweist.

12. Selektiver Fehlerstromschutzschalter nach einem der Ansprüche 9 bis 11, **dadurch gekennzeichnet**, daß der Transformator (27) ein normaler handelsüblicher HF-Transformator mit einem Ferritkern ist.

13. Selektiver Fehlerstromschutzschalter nach einem der Ansprüche 9 bis 12, **dadurch gekennzeichnet**, daß zwischen der Sekundärwicklung (25) des Summenstromwandlers (23) und der Primärwicklung (28) des Transformators (27) ein Paar Dioden (30, 31) derart antiparallel zwischengeschaltet ist, daß unterhalb ihrer Durchlaßspannung im wesentlichen kein Strom fließt und oberhalb ihrer Durchlaßspannung im wesentlichen der gesamte Strom fließt.

14. Selektiver Fehlerstromschutzschalter nach einem der Ansprüche 9 bis 13, **dadurch gekennzeichnet,** daß der Speicherkondensator (34, 35) zwei Kondensatoren (34, 35) aufweist, die jeweils einerseits mit dem einen Anschluß der Sekundärwicklung (29) des Transformators (27) verbunden sind und andererseits über jeweils eine der Dioden (40, 41) an den anderen Anschluß der Sekundärwicklung (29) des Transformators (27) angeschlossen sind.

15. Selektiver Fehlerstromschutzschalter nach einem der Ansprüche 9 bis 14, **dadurch gekennzeichnet,** daß der elektrische Schalter (38) einen die angesteuerte erste Stufe eines zweistufigen Verstärkers bildenden Transistor (44) aufweist, dessen Emitter angesteuert ist und der eine zweite Verstärkerstufe ansteuert, welche im wesentlichen aus der Kaskadenschaltung der zwei Transistoren (47, 48) gebildet ist.

16. Selektiver Fehlerstromschutzschalter nach Anspruche 15, **dadurch gekennzeichnet,** daß in der Gleichrichterschaltung (26) die Diode 40 in Reihe zwischen den Speicherkondensator (34, 35) und die Mikrozenerdiode (45) geschaltet und in Flußrichtung betrieben ist, um den Speicherkondensator (34, 35) mit der notwendigen Engergie zu versorgen, und mit ihrer in Flußrichtung anstehenden Spannung gerade die an der Emitter-Basisstrecke des Transistors (44) in Flußrichtung fallende Spannung kompensiert.

## Claims

1. An earth-leakage differential circuit breaker or switch with a totaliser current transformer (1, 23) and a trip means whose excitation coil (20, 37) is connected to the secondary winding (4, 25) of the totaliser current transformer (1, 23) by way of a tripping circuit (5, 33) which is independent of the voltage of the network, comprising a rectifier circuit (11, 26) which delivers to at least one charge capacitor (10, 34-35) the energy necessary to actuate the trip means, and an electronic valve (12, 38) controlled in dependence on the voltage accumulated in the charge capacitor (10, 34-35) for releasing said energy towards the excitation coil (20, 37) of the trip means, said electronic valve (12, 38) comprising two transistors (15-19, 47-48) mounted in cascade relationship and caused to conduct by a circuit comprising a voltage threshold element (13, 45) characterised in that said voltage threshold element is a Zener microdiode (13, 45) which is disposed in the non-conducting direction and which, on the side of the totaliser current transformer (1, 23), is connected to a diode (8, 41) belonging to the rectifier circuit (11, 26) and connected in parallel relationship to a series assembly comprising a diode (9, 40) and the charge capacitor (10, 34-35) so that the voltage which is applied thereto is higher than that applied to the charge capacitor (10, 34-35) and that the electronic valve (12, 38) forms a voltage threshold switch having low losses and a high input resistance whose switching curve in dependence on voltage is essentially determined by the Zener microdiode (13, 45).

2. An earth-leakage differential circuit breaker or switch according to claim 1 characterised in that the Zener microdiode (13, 45) has a Zener voltage of 2.5 V and that the electronic switch can be actuated by a Zener current of 20 µA.

3. An earth-leakage differential circuit breaker or switch according to either one of claims 1 and 2 characterised in that a resistor (14) is connected in series with the Zener microdiode (13) for adaptation of the tripping time characteristic of the electronic valve (12, 38).

4. An earth-leakage differential circuit breaker or switch according to any one of claims 1 to 3 characterised in that the rectifier circuit (11, 26) creates a dc voltage which is increased with respect to a halfwave rectifier bridge and which serves to control the electronic valve (12, 38).

5. An earth-leakage differential circuit breaker or switch according to any one of claims 1 to 4 characterised in that the excitation coil (20, 37) of the trip means is connected in series with the charge capacitor (10, 34-35) and the power switching circuit of the electronic valve (12, 38).

6. An earth-leakage differential circuit breaker or switch according to any one of claims 1 to 5 characterised in that a freewheel diode (21) is connected in parallel relationship to the excitation coil (20) of the trip means in the non-conducting direction with respect to the voltage accumulated in the charge capacitor (10).

7. An earth-leakage differential circuit breaker or switch according to any one of claims 1 to 6 characterised in that the primary winding of the totaliser current transformer (1, 23) comprises a single turn per phase and that resonance matching of the totaliser current transformer (1, 23) is provided in combination with the tripping circuit (5, 33).

8. An earth-leakage differential circuit breaker or switch according to any one of claims 1 to 7 characterised in that the tripping circuit (5) comprises both a parallel capacitor and a series capacitor (6, 7) connected to the input connections (E1, E2).

9. An earth-leakage differential circuit breaker or switch according to claim 1 characterised in that the earth-leakage differential circuit breaker or switch is a selective earth-leakage differential circuit breaker or switch and that the secondary winding (25) of the totaliser current transformer (23) comprises a low number of turns and that it is connected to the primary winding (28) of a transformer (27) whose secondary winding (29) is connected to the rectifier circuit (26).

10. A selective earth-leakage differential circuit breaker or switch according to claim 9 characterised in that the secondary winding (29) of the transformer (27) is connected to a resistor (32) which is connected in parallel relationship to the secondary winding (29) and which makes it possible to adjust on the one hand the effective input impedance and on the other hand the effective output impedance of the circuit formed by the transformer (27) and the resistor (32).

11. A selective earth-leakage differential circuit breaker or switch according to either one of claims 9 and 10 characterised in that the primary winding (28) and the secondary winding (29) of the transformer (27) have a common connection, and that the coil wire of the primary winding (28) is of a different diameter from that of the coil wire of the secondary winding (29).

12. A selective earth-leakage differential circuit breaker or switch according to any one of claims 9 to 11 characterised in that the transformer (27) is a commercially available ferrite-core HF transformer.

13. A selective earth-leakage differential circuit breaker or switch according to any one of claims 9 to 12 characterised in that inserted between the secondary winding (25) of the totaliser current transformer (23) and the primary winding (28) of the transformer (27) is a pair of diodes (30, 31) in anti-parallel relationship such that practically no current flows below the conduction voltage, and that practically the whole of the current flows above the conduction voltage.

14. A selective earth-leakage differential circuit breaker or switch according to any one of claims 9 to 13 characterised in that the charge capacitor (34, 35) comprises two capacitors (34, 35) connected on the one hand to one of the connections of the secondary winding (29) of the transformer (27) and on the other hand by way of one of the diodes (40, 41) to the other connection of the secondary winding (29) of the transformer (27).

15. A selective earth-leakage differential circuit breaker or switch according to any one of claims 9 to 14 characterised in that the electronic valve (38) comprises a transistor (44) whose emitter is controlled and which forms the first stage of a controlled double stage amplifier, said transistor (44) controlling a second amplifier stage essentially formed by the cascade arrangement of the two transistors (47, 48).

16. A selective earth-leakage differential circuit breaker or switch according to claim 15 characterised in that in the rectifier circuit (26) the diode (40) of the series assembly is inserted between the charge capacitor (34, 35) and the Zener microdiode (45) and is disposed in the conducting direction to deliver the necessary energy to the charge capacitor (34, 35), and that its voltage produced in the conducting direction precisely compensates the decreasing voltage on the emitter-base path of the transistor (44) in the conducting direction.
